(19)

**Europäisches Patentamt**

**European Patent Office**

**Office européen des brevets**

(11)  **EP 4 730 692 A1**

(12)  # EUROPEAN PATENT APPLICATION

(43) Date of publication:
**22.04.2026 Bulletin 2026/17**

(21) Application number: **24306735.2**

(22) Date of filing: **17.10.2024**

(51) International Patent Classification (IPC):
**H04L 9/00** *(2022.01)*    **H04L 9/08** *(2006.01)*

(52) Cooperative Patent Classification (CPC):
**H04L 9/0866; H04L 9/002;** H04L 2209/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **FOESSER, Christophe**
  **13600 LA CIOTAT (FR)**
• **FILLATRE, Eric**
  **75013 PARIS (FR)**

(74) Representative: **Bricks, Amélie**
  **Thales Dis France SAS**
  **Intellectual Property Department**
  **6, rue de la Verrerie**
  **92190 Meudon (FR)**

(54)  **METHOD FOR PROTECTING A SOFTWARE CODE IMPLEMENTING A CRYPTOGRAPHIC ALGORITHM AGAINST CLONING ATTACKS**

(57)    The present invention relates to a method for protecting against cloning attacks a client application comprising a standard implementation of a cryptographic algorithm taking as input a reference cryptographic key , a client device storing instead of said reference cryptographic key and said client application:
• a bound whitebox cryptographic key generated by a bound whitebox cryptographic key generator of a server device, from said reference cryptographic key, depending on a reference secret binding parameter,
• a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,

said method being performed by the client device when executing the modified client application and comprising:
- retrieving (S1) a runtime secret binding parameter,
- executing (S2) said whitebox-protected implementation of said cryptographic algorithm using as inputs said bound whitebox cryptographic key and said runtime secret binding parameter.

[Fig. 3b]

**Description**

**FIELD OF THE INVENTION**

The present invention relates to the field of software code protection, and of associated devices, and more particularly to a method for protecting a software code implementing a cryptographic algorithm against cloning attacks.

**BACKGROUND OF THE INVENTION**

A first application of cryptography is to provide mechanisms to protect data, such as messages exchanged on a communication channel, from being accessed by an unauthorized user. A plaintext piece of data may be protected by converting it into a ciphertext that may only be deciphered, i.e., converted back into the original data by someone or some device owning a secret key required for performing the deciphering operation.

Public key cryptography can also be used for authenticating the issuer of a message. Such an issuer can generate a signature based on said message using his private key. The recipient of the message can then use the public key of the alleged issuer for verifying that the signature was generated using the associated private key i.e. that the issuer of the message is indeed who he claims to be. An example of widely used public key cryptosystem is Rivest-Shamir-Adelman (RSA) cryptosystem.

Of course, user sensitive data, secret key or private key must remain secret, otherwise an attacker may use sensitive data for fraudulent purposes such as stealing digital money or generating forged signatures of a message as if he was the true owner of the private key.

Traditionally, in order to ensure that the secret/private key and sensitive data remain secret, the encryption/decryption or signature algorithm or any other operation using a sensitive data as input is supposed to be executed in a secure environment only. The device executing such an algorithm is assumed trusted, preventing any attacker from accessing either the secret/private key or the sensitive data itself. This is referred to as black box cryptography. Hardware security modules (HSM) may for example be used for performing sensitive computations.

However, operations using as input sensitive data and cryptographic processes are more and more deployed in applications executed on open devices that cannot be fully trusted. For example, many user devices now have access to the Internet, such as PCs, tablets, smartphones, and may be used for performing banking operations handling sensitive Identity information or for playing copyrighted digital content such as audio or video files which may be cryptographically protected, for example using digital rights management (DRM) files, in order to make it available to a user only as long as the user has subscribed to an online multimedia streaming service.

Cryptographic processes are then executed in an environment where not all users or devices can be trusted. Such a context is usually called a white-box context. In such a context, sensitive data such as private keys, are vulnerable to attacks since the attacker has full access to the software implementation of the cryptographic processes. Binary code of such processes is completely accessible and editable by the attacker that can analyze the binary code of the cryptography application and, for example, memory pages or registers used for temporary storage during the execution. Such manipulation may, for example, be performed using debuggers and hardware emulation tools.

In order to protect cryptographic operations against such white box attacks, the encryption/decryption/signing key may be provided on the subscriber's cryptography device, e.g., a mobile device such as a mobile phone, in a manner such that the key can be used by the device to encrypt, decrypt or to sign without revealing either the key or the algorithm to the subscriber. The key might be hidden in some way inside the code implementing the decryption or signature algorithm so that it is very difficult to determine any information about the value of the key. This scenario is referred to as white box (protected) cryptography. White-box cryptography was first described by Chow et al. in [Chow AES] Stanley Chow, et al., White-Box Cryptography and an AES Implementation, in Proceedings of the 9th International Workshop on Selected Areas in Cryptography (SAC 2002), volume 2595 of Lecture Notes in Computer Science, pp. 250-270. Springer, 2002 and in [Chow DES] Stanley Chow, et al., White-Box Cryptography DES Implementation for DRM applications, in Proceedings of the ACM Workshop on Security and Digital Rights Management (DRM 2002), volume 2696 of Lecture Notes in Computer Science, pp. 1-15. Springer, 2002.

Such a white box protection prevents an attacker from accessing data processed by a cryptographic operation; and especially from getting knowledge of the cryptographic key used for the cryptographic operation. As the cryptographic key is turned into a complex white box-protected key whose format is adapted to be used by the white box-protected cryptographic algorithm, the attacker cannot gain knowledge of the original cryptographic key to be used with the original cryptographic algorithm before applying to it the white box protection.

Nevertheless, such a white box protection brings no protection against cloning attacks. When the cryptographic operation is implemented in a user application, white box protection does not prevent an attacker from installing the same user application on another device and from copying the white box-protected cryptographic key on this other device in order to execute the cryptographic algorithm with this cryptographic key on this other device even if the attacker is not the owner of the cryptographic key.

In order to conceal a secret data, a well-known solution can be to store it in a secure storage, such as a secure element or a TEE, to which an attacker has no access. Nevertheless, a major drawback of such secure storage solutions is their much lower resources than those of the untrusted device hosting it, both in terms of computational power and memory; and a white box-protected key is much larger than its equivalent original key. Therefore, storing it in a secure storage has the drawback of occupying a large memory size in this secure storage. This can be an issue since available secure storage size is often limited, particularly in small resource-limited devices such as a SoC or a smartchip.

In addition, even when a white box-protected key is stored in a secure storage, it does not fully prevent an attacker from cloning it. Indeed, when the key is to be used for a cryptographic operation, it is restored from the secure storage to the main memory and an attacker may gain access to it at this time and reuse it later.

Therefore, there is a need for a method enabling to protect an application implementing a cryptographic algorithm, and the cryptographic key used for this algorithm, against cloning attacks with a reduced footprint on available secure storage on the device executing this cryptographic algorithm.

## SUMMARY OF THE INVENTION

For this purpose and according to a first aspect, this invention therefore relates to a method for protecting against cloning attacks a client application comprising a standard implementation of a cryptographic algorithm taking as input a reference cryptographic key,

a client device storing instead of said reference cryptographic key and said client application:

- a bound whitebox cryptographic key generated by a bound whitebox cryptographic key generator of a server device, from said reference cryptographic key, depending on a reference secret binding parameter,
- a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,

said method being performed by the client device when executing the modified client application and comprising:

- retrieving a runtime secret binding parameter,
- executing said whitebox-protected implementation of said cryptographic algorithm using as inputs said bound whitebox cryptographic key and said runtime secret binding parameter.

Such modifications of the client application and the cryptographic key ensure that the modified client application implementing the cryptographic algorithm will provide the correct output only when the correct bound whitebox cryptographic key and secret binding parameter are provided to it.

Said cryptographic algorithm may comprise multiple rounds and the modified client application may be previously generated by making at least an operation in at least two of said rounds take as input said runtime secret binding parameter.

By doing so, the secret binding parameter is not used to regenerate the reference cryptographic key, or its white box protected equivalent to be used by a standard white box algorithm, but rather directly used in the computation inside rounds of the cryptographic algorithm. Therefore, an attacker cannot retrieve the reference cryptographic key even in a whitebox context.

The reference secret binding parameter may be equal to a client secret value transmitted by the client device to the server device at an enrollment step and retrieving a runtime secret binding parameter may comprise retrieving said client secret value. Alternatively, the reference secret binding parameter may be derived using a derivation function from a client secret value transmitted by the client device to the server device at an enrollment step and retrieving a runtime secret binding parameter may comprise retrieving said client secret value and using said derivation function for deriving said runtime secret binding parameter from said client secret value. The derivation operation of said runtime secret binding parameter may be obfuscated in said modified client application.

In order to an attacker from retrieving the runtime secret binding parameter while it is stored in a volatile memory of the client device, the execution of the modified client application may also be protected by obfuscation and by existing solutions protecting against dynamic attacks such as attacks based on debuggers or emulation.

According to a first embodiment, the client secret value may be stored ciphered in a memory of the client device or may be stored in a secure storage of the client device for example among: a secure keystore, a Secure Element, a Trusted Execution Environment.

Such a way of storing the client secret data protects it against access by an attacker to a cleartext value of it., thereby preventing him from reusing it when executing a clone of the modified client application on another device: an attacker cloning the memory of the client device to another device would not be able to copy the client secret data and an execution of the modified client application on another device would fail since it could not retrieve the correct secret binding parameter and provide it as input to the cryptographic algorithm.

According to a second embodiment, the client secret value may be generated on-the-fly at an enrollment step and retrieving a client secret value may comprises generating on-the-fly said client secret value, wherein said on-the-fly generation depends on a client device hardware or software context. The client secret value may be generated from a combination of values among fingerprints of hardware data, outputs of a Physically Unclonable Function and values generated from the software execution context of the application.

In such a case, a clone application installed on another device by an attacker would have a different context and would not dynamically generate the expected client secret value, leading the execution of the clone application to output an incorrect value.

Said cryptographic algorithm may be among: an encryption algorithm, a decryption algorithm or a signature generation algorithm.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a client device for protecting against cloning attacks a client application comprising a standard implementation of a cryptographic algorithm taking as input a reference cryptographic key, comprising:

- an interface to be connected to a server device comprising a bound whitebox cryptographic key generator,
- an application memory storing, instead of said reference cryptographic key, a bound whitebox cryptographic key generated by said bound whitebox cryptographic key generator of said server device, from said reference cryptographic key, depending on a reference secret binding parameter, and storing, instead of said client application, a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,

- a processor configured for performing, when executing the modified client application:

  ◦ retrieving a runtime secret binding parameter,
  ◦ executing said whitebox-protected implementation of said cryptographic algorithm using as inputs said bound whitebox cryptographic key and said runtime secret binding parameter.

According to a fourth aspect, this invention therefore relates also to a system for protecting against cloning attacks a client application comprising a standard implementation of a cryptographic algorithm taking as input a reference cryptographic key, comprising:

- a client device comprising:

  - an interface to be connected to a server device comprising a bound whitebox cryptographic key generator,
  - an application memory storing, instead of said reference cryptographic key, a bound whitebox cryptographic key generated by said bound whitebox cryptographic key generator of said server device, from said reference cryptographic key, depending on a reference secret binding parameter, and storing, instead of said client application, a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,
  - a processor configured for performing, when executing the modified client application:

    ◦ retrieving a runtime secret binding parameter,
    ◦ executing said whitebox-protected implementation of said cryptographic algorithm using as inputs said bound whitebox cryptographic key and said runtime secret binding parameter,

- and said server device comprising said bound whitebox cryptographic key generator.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of a client device according to an embodiment of the present invention.
- Figure 2 is a schematic illustration of a system according to an embodiment of the present invention.
- Figures 3a and 3b illustrate schematically the enrollment phase and the runtime phase of the method for protecting against cloning attacks a client application comprising a standard implementation of a cryptographic algorithm according to embodiments of the present invention.

## DETAILED DESCRIPTION OF EMBODIMENTS OF THE INVENTION

The invention aims at protecting against cloning attacks a client application comprising a standard implementation of a cryptographic algorithm. Such a cryptographic algorithm may for example be an encryption or decryption algorithm such as AES or RSA, or a signature generation algorithm such as ECDSA. Before applying any whitebox protection to this algorithm, it is designed to take as input a cryptographic key called reference cryptographic key here below.

This client application is supposed to be installed in a memory of a client device. The goal of the method according to the invention is to enable the client device to get the results it would obtain from the client application when executing the standard implementation of the cryptographic algorithm using the reference cryptographic key while preventing an attacker who would have access to the memory of the client device from running the cryptographic algorithm using the same reference cryptographic key on another device by cloning the application and the reference cryptographic key from the client device to this other device.

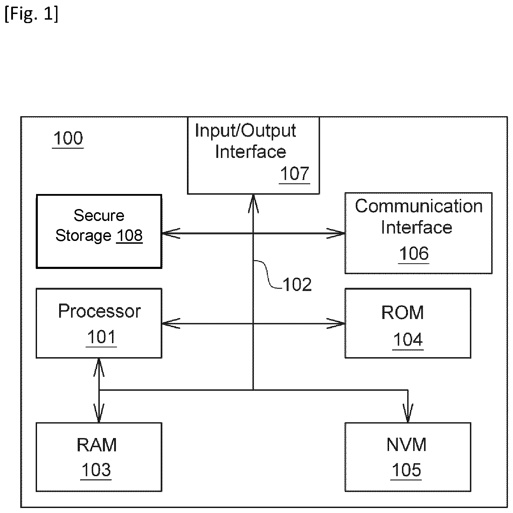

**Figure 1** is a schematic illustration of such a client device 100. The client device 100 may include a processor 101 connected via a bus 102 to a random-access memory (RAM) 103, a read-only memory (ROM) 104, and/or a nonvolatile memory (NVM) 105. The client device 100 further includes a communication interface 106 by which the client device 100 may be connected to various forms of wireless networks, e.g., wide-area networks, WiFi networks, or mobile telephony networks. Alternatively, the client device 100 may connect to networks via wired network connections such as Ethernet. The client device may also include input/output means 107 providing interfaces to the user of the client device, such as one or more screens, loudspeakers, a mouse, tactile surfaces, a keyboard etc... The client device may also comprise a secure storage 108. Such a secure storage may for example be among a secure keystore, a Secure Element, a Trusted Execution Environment (TEE).

In order to prevent an attacker from cloning the client application and the reference cryptographic key on another device and to use it to successfully run the cloned application, a main idea of the invention is to bind the client application to the client device such that its execution fails when attempted on a different device.

In order to do so, the method according to the invention modifies the client application such that it takes as inputs both the cryptographic key and an additional binding parameter which is specific to the client device, and it modifies the cryptographic key such that its value depends on the binding parameter. By doing so, the modified application remains generic but requires a second input and the cryptographic key is not generic anymore but become specific to the client device.

In order to ensure that an attacker cannot still successfully clone the modified client application, another idea of the method according to the invention is to make this binding parameter, or a value from which it is derived, impossible to copy for an attacker, for example by using a secure storage to store it or by having it generated on the fly depending on parameters specific to the client device.

As a result, if an attacker clones to another device the modified client application and the modified cryptographic key and tries to run the application, this binding value which is difficult to copy will either be missing or will have a wrong value and the execution of the cryptographic algorithm implemented in the application will be altered and will provide an incorrect output.

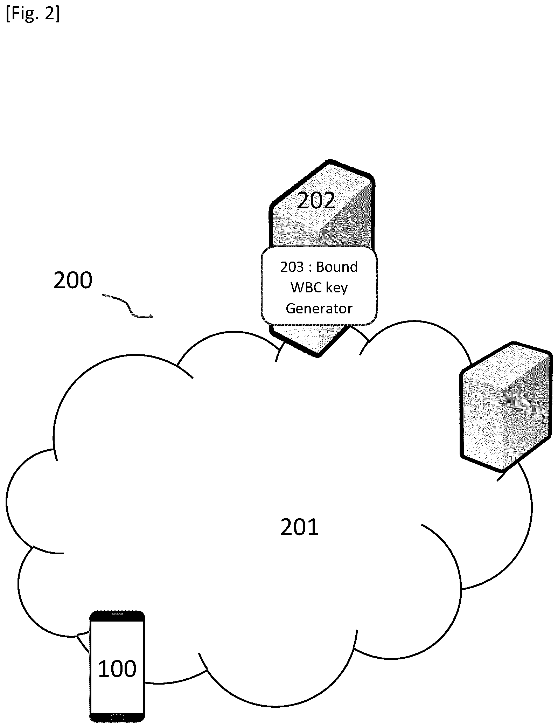

As shown on **Figure 2,** the client device 100 may be connected through a network 201 to a server device 202 to which the client device enrolls itself on a system 200. This server device comprises a bound whitebox cryptographic key generator 203.

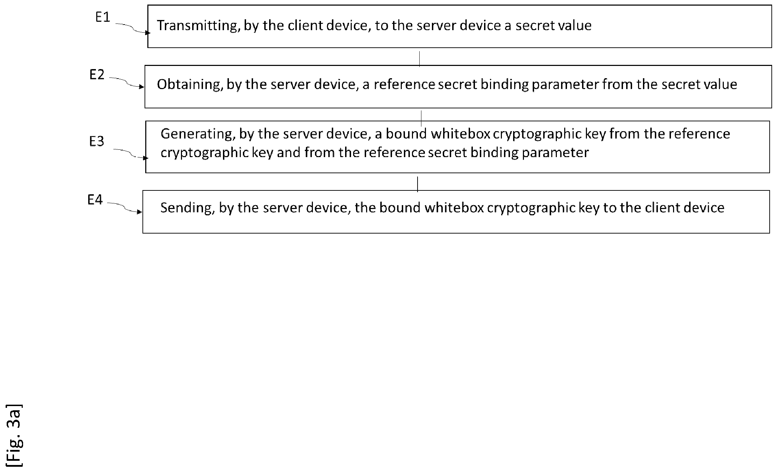

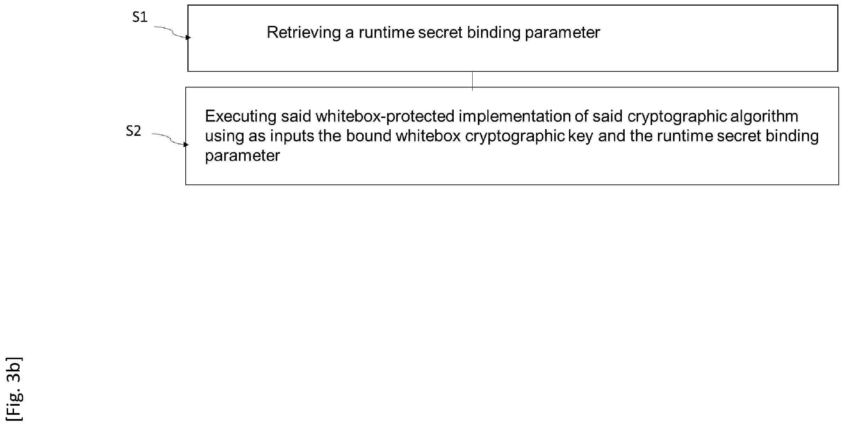

The following paragraphs describe, according to a first aspect of the invention, and as depicted on **figures 3a and 3b,** the steps of a **method** according to the invention. Such a method comprises:

- a development and deployment phase during which the modified application is generated and deployed on the client device;
- an enrollment phase during which the modified cryptographic key is generated by a server device and transmitted to the client device illustrated on figure 3a;
- a runtime phase during which the client device uses the modified application and modified cryptographic key to execute the cryptographic algorithm illustrated on figure 3b.

In the development and deployment phase, the modified client application is first generated by modifying a standard implementation of the cryptographic algorithm. This modified client application comprises a whitebox-protected implementation of the cryptographic algorithm. This whitebox-protected implementation is not a standard whitebox-protected implementation, which would take as input a standard whitebox cryptographic key, unbound to any additional secret. It is rather a specific whitebox-protected implementation, hereafter called bound whitebox-protected implementation, configured to take as inputs both an input secret binding parameter and a bound whitebox cryptographic key, different from the reference cryptographic key and different from the standard whitebox cryptographic key that would be generated from the reference cryptographic key by a whitebox cryptographic key generator which would not take into account such a binding. It will then deliver a result equal to the result of the execution of the original cryptographic algorithm using as input the reference cryptographic key when the bound whitebox cryptographic key and the correct input secret binding parameter are provided as inputs. Otherwise, when the input secret binding parameter used as input is not equal to an expected value, it will deliver a different result.

To prevent an attacker from retrieving the reference cryptographic key, the modified client application does not reconstruct the reference cryptographic key from the bound whitebox cryptographic key and the input secret binding parameter. It rather uses as many times as needed the input secret binding parameter as input to an internal operation of the algorithm. As an example, when the cryptographic algorithm comprises multiple rounds, as it is the case in AES, the modified client application may comprise a non-standard implementation of the cryptographic algorithm in which there is at least an operation in at least two rounds, possibly in all rounds, which takes as additional input the runtime secret binding parameter.

In this particular implementation of the cryptographic algorithm, the execution of the cryptographic algorithm will use the secret binding parameter to compensate for the differences between the bound whitebox cryptographic key it gets as input and the reference cryptographic key that would be used with a standard implementation of the algorithm.

In the development and deployment phase, the modified client application is then deployed onto the client device. Such a deployment may be performed as part of the manufacturing process of the client device; it may be performed later when the client device is personalized for a particular client; or the modified client application may be deployed onto the client device by the client himself, for example by downloading it from a repository or an application store.

A first example of modified client application is given where the cryptographic algorithm of the client application is the signature algorithm ECDSA. A standard implementation of this algorithm can be summarized by the following operations for signing a message m with a secret key $d_A$:

1. $e = H(m)$, H being a hash function
2. Let z be the $L_n$ leftmost bits of e where $L_n$ is the bit length of the group order n
3. Select an integer $k$ from [1, $n$ - 1] randomly
4.

$$(x_1, y_1) = k \times G$$

with G a base point of prime order on the curve
5. $r = x_1 \, mod \, n$. If $r = 0$ then go back step 3
6.

$$s = k^{-1}(z + rd_A) \, mod \, n.$$

If s= 0 then go back step 3
7. return (s, r)

In this example, the implementation of the cryptographic algorithm in the modified client application may comprise additional steps for computing a modified first part of the signature s' which is equal to s only when the input secret binding parameter is equal to a reference secret binding parameter:

7.

$$s' = s + h - H\big(c||p_{input}\big) \text{ such that } h = H\big(c||p_{ref}\big)$$

with *c a secret constant*

$p_{ref}$ *the reference secret binding parameter*
$p_{input}$ *the input secret binding parameter*

8. return (*s'*,*r*)

A second example of modified client application is given where the cryptographic algorithm of the client application is AES. In a standard implementation of this algorithm, each round performs the following operations on the state matrix:

- AddRoundKey(*state*, $k_r$), with $k_r$ a round key
- ShiftRows(*state*)
- SubBytes(*state*)
- MixColumns(*state*)

In this example, the implementation of the cryptographic algorithm in the modified client application may comprise an additional operation, performed at each round, by which the state is XORed with two matrixes: one depending on the input secret binding parameter and the other depending on a reference secret binding parameter, such that the state is modified when the input secret binding parameter is not equal to the reference secret binding parameter:

- AddRoundKey(*state*, $k_r$)
- ShiftRows(*state*)
- SubBytes(*state*)
- *state* ← state $\oplus f(p_{input}, r) \oplus f(p_{ref}, r)$
- MixColumns(state)

with $f(p, r) = H(p||c||r)$, H a hash function, c a constant value, r the round number, $p_{ref}$ the reference secret binding parameter, $p_{input}$ the input secret binding parameter. The function f outputs only the n first bytes of the hash result where n is the size of the state matrix.

The following paragraphs describe the enrollment steps performed during the enrollment phase of the method according to the invention (Figure 3a).

In a first enrollment step E1, the client device transmits to the server device a client secret value which is specific to the client device. Different embodiments for this secret value will be described here below.

In a second enrollment step E2, the server device obtains a reference secret binding parameter from the client secret value received at the first enrollment step E1. This reference secret binding parameter is a value, specific to the client device, that the client device will have to provide at runtime as additional input to its cryptographic algorithm in order to prove that the application running the algorithm has not been cloned.

In a third enrollment step E3, the server device generates a bound whitebox cryptographic key, using its bound whitebox cryptographic key generator 203, from the reference cryptographic key and from the reference secret binding parameter obtained at the second enrollment step E2. By doing so, the bound whitebox cryptographic key to be used with the cryptographic algorithm is bound to the reference secret binding parameter, which is specific to the client device, in order to make it usable only by the client device providing the correct secret binding parameter. In order for this to work, the bound whitebox cryptographic key generator must be coherent with the modified client application such that the generated bound whitebox cryptographic key matches the way it will be combined with the secret binding parameter in the particular implementation of the cryptographic algorithm.

In a fourth enrollment step E4, the server device sends the bound whitebox cryptographic key to the client device.

Once these enrollment steps have been completed, the client device stores, instead of a client application comprising a standard implementation of the cryptographic algorithm and the reference cryptographic key, only the bound whitebox cryptographic key and the modified client application. Therefore, an attacker getting access to the memory of the client device will not gain knowledge of the reference cryptographic key which he could use with a standard implementation of the cryptographic algorithm. Instead, he can only gain knowledge of the bound whitebox cryptographic key which can only be used by the modified client application, and which is tied to the reference secret binding parameter.

The following paragraphs describe the runtime steps performed by the client device executing the modified client application during the runtime phase of the method according to the invention (Figure 3b).

In a first runtime step S1, the client device retrieves a runtime secret binding parameter.

In a second runtime step S2, the client device executes the whitebox-protected implementation of the cryptographic algorithm using as inputs the bound whitebox cryptographic key and the runtime secret binding parameter retrieved at the first runtime step. As per definition of the modified client application, this execution of the whitebox-protected implementation of the cryptographic algorithm will output the expected result only when the right bound whitebox cryptographic key is used and when the runtime secret binding parameter provided as input is equal to the reference secret binding parameter used by the bound whitebox cryptographic key generator of the server device to generate the bound whitebox cryptographic key and used to provision the modified client application.

The following paragraphs will now describe several different embodiments of the method according to the invention.

In the following embodiments, the reference secret binding parameter may be equal to the client secret value transmitted by the client device to the server device at the first enrollment step E1. In such a case, in the second enrollment step E2 the server device just takes the client secret value it receives at the reference secret binding parameter; and at the first runtime step S1 retrieving runtime secret binding parameter is performed by the modified client application by just retrieving the client secret value.

Alternatively, the reference secret binding parameter may be derived from the client secret value using a derivation function. In such a case, the same derivation function is used both by the server device at the second enrollment step E2 to obtain the reference secret binding parameter from the client secret value it received and by the client device at the first runtime step S1 to retrieve the runtime secret binding parameter from its client secret value. This derivation operation may be obfuscated in the modified client application in order to prevent an attacker from spying on it.

In a first embodiment, the client secret value is stored in a memory of the client device. It can be a random value specific to the client device, generated at the beginning of the enrollment phase and then stored in memory.

The client secret value may be stored in a secure storage, to make it difficult for an attacker to copy it. Alternatively, the client device may store a ciphered value in a memory, and it may securely decipher it, for example using a secure enclave, to get its client secret value.

In a second embodiment, the client secret value is generated on-the-fly by the client device depending on the client device hardware or software context, such that the same value may be consistently generated over time, first at the first enrollment step and then at each execution of the modified application. As an example, it may be generated from a combination of values among:

- fingerprints of hardware data such as MAC address, components serial numbers, processor type, amount of memory...,

- outputs of a Physically Unclonable Function (PUF),

- values generated from the software execution context of the application such as the version of the OS, firmware versions, values of software variables...

In an embodiment, the client secret value may be generated on-the-fly by combining one or more of these values with a password, such as a PIN code, to be input by the device owner when the client secret value is to be generated or with other user data captured by the device, such as the user's face for facial recognition or the user's fingerprint.

According to a second aspect, the invention is also related to a computer program product directly loadable into the memory of at least one computer, comprising software code instructions for performing the steps of the method according to the first aspect as described above when said product is run on the computer.

According to a third aspect, this invention therefore relates also to a client device 100 configured for performing the steps of the method according to the first aspect as described here above. This client device is configured for protecting against cloning attacks a client application comprising a standard implementation of a cryptographic algorithm taking as input a reference cryptographic key, and comprises:

- an interface 107 to be connected to a server device comprising a bound whitebox cryptographic key generator,
- an application memory 105 storing, instead of said reference cryptographic key, a bound whitebox cryptographic key generated by said bound whitebox cryptographic key generator of said server device from said reference cryptographic key depending on a reference secret binding parameter, and storing, instead of said client application, a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,

- a processor 101 configured for performing, when executing the modified client application:

  ○ retrieving a runtime secret binding parameter,
  ○ executing said whitebox-protected implementation of said cryptographic algorithm using as inputs said bound whitebox cryptographic key and said runtime secret binding parameter.

According to a fourth aspect, this invention therefore relates also to a system 200 for protecting against cloning attacks a client application comprising a standard implementation of a cryptographic algorithm taking as input a reference cryptographic key described and illustrated here and comprising:

- a client device 100 described and illustrated here above comprising:

  - an interface to be connected to a server device comprising a bound whitebox cryptographic key generator,
  - an application memory storing, instead of said reference cryptographic key, a bound whitebox cryptographic key generated by said bound whitebox cryptographic key generator of said server device from said reference cryptographic key depending on a reference secret binding parameter, and storing, instead of said client application, a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,
  - a processor configured for performing, when executing the modified client application:

    ○ retrieving a runtime secret binding parameter,
    ○ executing said whitebox-protected implementation of said cryptographic algorithm using as inputs said bound whitebox cryptographic key and said runtime secret binding parameter,

- and said server device 202 comprising said bound whitebox cryptographic key generator 203.

As a result, the method according to the invention, and the corresponding device enable to bind the cryptographic algorithm to be executed by the client device and the secret key to be used by this algorithm to a client device-specific secret value that cannot easily be copied by an attacker to a different device, even in a whitebox context. It ensures that the modified client application implementing the cryptographic algorithm will provide the correct output only when the device executing it provides the correct client device-specific secret value, thereby efficiently protecting the client application against cloning attacks.

## Claims

1. A method for protecting against cloning attacks a client application comprising a standard implementation of a cryptographic algorithm taking as input a reference cryptographic key,

   a client device (100) storing instead of said reference cryptographic key and said client application:

   • a bound whitebox cryptographic key generated by a bound whitebox cryptographic key generator of a server device (202), from said reference cryptographic key, depending on a reference secret binding parameter,
   • a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,

said method being performed by the client device when executing the modified client application and comprising:

- retrieving (S1) a runtime secret binding parameter,
- executing (S2) said whitebox-protected implementation of said cryptographic algorithm using as inputs said bound whitebox cryptographic key and said runtime secret binding parameter.

2. The method of claim 1, wherein said cryptographic algorithm comprises multiple rounds and wherein the modified client application is previously generated by making at least an operation in at least two of said rounds take as input said runtime secret binding parameter.

3. The method of claim 1 or 2, wherein the reference secret binding parameter is equal to a client secret value transmitted by the client device to the server device at an enrollment step and retrieving (S1) a runtime secret binding parameter comprises retrieving said client secret value.

4. The method of claim 1 or 2, wherein the reference secret binding parameter is derived using a derivation function from a client secret value transmitted by the client device to the server device at an enrollment step and retrieving (S1) a runtime secret binding parameter comprises retrieving said client secret value and using said derivation function for deriving said runtime secret binding parameter from said client secret value.

5. The method of claim 4, wherein the derivation operation of said runtime secret binding parameter is obfuscated in said modified client application.

6. The method of any one of claims 3 to 5, wherein the client secret value is stored ciphered in a memory of the client device or is stored in a secure storage of the client device.

7. The method of claim 6, wherein said secure storage is among: a secure keystore, a Secure Element, a Trusted Execution Environment.

8. The method of any one of claim 3 to 7, wherein the client secret value is generated on-the-fly at an enrollment step and retrieving (S1) a client secret value comprises generating on-the-fly said client secret value, wherein said on-the-fly generation depends on a client device hardware or software context.

9. The method of claim 8, wherein the client secret value is generated from a combination of values among fingerprints of hardware data, outputs of a Physically Unclonable Function and values generated from the software execution context of the application.

10. The method of any one of claims 1 to 9, wherein said cryptographic algorithm is among: an encryption algorithm, a decryption algorithm or a signature generation algorithm.

11. A computer program product directly loadable into the memory of at least one computer, comprising software code instructions for performing the steps of any one of claims 1 to 10, when said product is run on the computer.

12. A client device (100) for protecting against cloning attacks a client application comprising a standard implementation of a cryptographic algorithm taking as input a reference cryptographic key, comprising:

• an interface (107) to be connected to a server device comprising a bound whitebox cryptographic key generator,
• an application memory (105) storing, instead of said reference cryptographic key, a bound whitebox cryptographic key generated by said bound whitebox cryptographic key generator of said server device, from said reference cryptographic key, depending on a reference secret binding parameter, and storing, instead of said client application, a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,
• a processor (101) configured for performing, when executing the modified client application:

○ retrieving a runtime secret binding parameter,
○ executing said whitebox-protected implementation of said cryptographic algorithm using as inputs said bound whitebox cryptographic key and said runtime secret binding parameter.

13. A system (200) for protecting against cloning attacks a client application comprising a standard implementation of a cryptographic algorithm taking as input a reference cryptographic key, comprising:

- a client device (100) comprising:

• an interface (107) to be connected to a server device comprising a bound whitebox cryptographic key generator,
• an application memory (105) storing, instead of said reference cryptographic key, a bound whitebox cryptographic key generated by said bound whitebox cryptographic key generator of said server device, from said reference cryptographic key, depending on a reference secret binding parameter, and storing, instead of said client application, a modified client application comprising a whitebox-protected implementation of said cryptographic algorithm configured to take as inputs said stored bound whitebox cryptographic key and an input secret binding parameter, and delivering a result equal to the result of the execution of the cryptographic algorithm using as input said reference cryptographic key when said input secret binding parameter used as input is equal to said reference secret binding parameter, and delivering a different result otherwise,
• a processor (101) configured for performing, when executing the modified client application:

    ◦ retrieving a runtime secret binding parameter,
    ◦ executing said whitebox-protected implementation of said cryptographic algorithm using as inputs said bound whitebox cryptographic key and said runtime secret binding parameter,

- and said server device (202) comprising said bound whitebox cryptographic key generator (203).

[Fig. 1]

[Fig. 2]

200

202

203 : Bound
WBC key
Generator

201

100

[Fig. 3a]

E1 Transmitting, by the client device, to the server device a secret value

E2 Obtaining, by the server device, a reference secret binding parameter from the secret value

E3 Generating, by the server device, a bound whitebox cryptographic key from the reference cryptographic key and from the reference secret binding parameter

E4 Sending, by the server device, the bound whitebox cryptographic key to the client device

[Fig. 3b]

S1 — Retrieving a runtime secret binding parameter

S2 — Executing said whitebox-protected implementation of said cryptographic algorithm using as inputs the bound whitebox cryptographic key and the runtime secret binding parameter

Europäisches
Patentamt

European
Patent Office

Office européen
des brevets

# EUROPEAN SEARCH REPORT

**Application Number**

EP 24 30 6735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/192283 A1 (GU YUAN XIANG [CA] ET AL) 26 July 2012 (2012-07-26) * abstract * * paragraphs [0002] - [0121] * * figures 1-29 * | 1-13 | INV. H04L9/00 H04L9/08 |
| A | JIYI ZHANG ET AL: "Mitigating Adversarial Attacks by Distributing Different Copies to Different Users", ARXIV.ORG, CORNELL UNIVERSITY LIBRARY, 201 OLIN LIBRARY CORNELL UNIVERSITY ITHACA, NY 14853, 30 January 2022 (2022-01-30), XP091130577, * the whole document * | 1-13 | |
| A | US 2021/312018 A1 (ADJEDJ MICHAEL [FR] ET AL) 7 October 2021 (2021-10-07) * abstract * * paragraphs [0001] - [0088] * * figures 1-3 * | 1-13 | |

**TECHNICAL FIELDS SEARCHED (IPC)**

H04L
G06F
H04W

The present search report has been drawn up for all claims

| Place of search | Date of completion of the search | Examiner |
|---|---|---|
| Munich | 19 March 2025 | Mariggis, Athanasios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 30 6735

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | Publication date |
|---|---|---|---|
| US 2012192283 A1 | 26-07-2012 | CA 2761065 A1 | 11-11-2010 |
| | | CN 102483790 A | 30-05-2012 |
| | | EP 2430584 A1 | 21-03-2012 |
| | | JP 5808019 B2 | 10-11-2015 |
| | | JP 2012526310 A | 25-10-2012 |
| | | KR 20120032477 A | 05-04-2012 |
| | | US 2012192283 A1 | 26-07-2012 |
| | | WO 2010127438 A1 | 11-11-2010 |
| US 2021312018 A1 | 07-10-2021 | EP 3608806 A1 | 12-02-2020 |
| | | EP 3834105 A1 | 16-06-2021 |
| | | US 2021312018 A1 | 07-10-2021 |
| | | WO 2020030387 A1 | 13-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- White-Box Cryptography and an AES Implementation, in Proceedings of the 9th International Workshop on Selected Areas in Cryptography (SAC 2002). **STANLEY CHOW et al.** Lecture Notes in Computer Science. Springer, 2002, vol. 2595, 250-270

- White-Box Cryptography DES Implementation for DRM applications, in Proceedings of the ACM Workshop on Security and Digital Rights Management (DRM 2002). **STANLEY CHOW et al.** Lecture Notes in Computer Science. Springer, 2002, vol. 2696, 1-15